# Europäisches Patentamt

## European Patent Office

### Office européen des brevets

(19)

(11) Publication number: **0 047 259**
**B1**

(12)

# EUROPEAN PATENT SPECIFICATION

(45) Date of publication of the patent specification:
**25.01.84**

(51) Int. Cl.³: **A 01 C 1/04**

(21) Application number: **81900518.2**

(22) Date of filing: **02.03.81**

(86) International application number:
**PCT/GB 81/00031**

(87) International publication number:
**WO 81/02503 (17.09.81 Gazette 81/22)**

(54) **SEED PLANTING DEVICE.**

(30) Priority: **03.03.80 GB 8007093**

(43) Date of publication of application:
**17.03.82 Bulletin 82/11**

(45) Publication of the grant of the patent:
**25.01.84 Bulletin 84/4**

(84) Designated Contracting States:
**DE FR GB NL SE**

(56) References cited:
**US - A - 3 098 320**
**US - A - 3 098 321**
**US - A - 4 080 755**

(73) Proprietor: **WILKINSON SWORD LIMITED, Sword House Totteridge Road, High Wycombe Buckinghamshire HP13 6EJ (GB)**

(72) Inventor: **ADAMS, James Edward, 177 Noak Hill Road, Billericay, Essex (GB)**
Inventor: **LAURIE, Alexander Spiers, 68 High Street, Melbourne, Royston, Hertfordhsire (GB)**

(74) Representative: **Lambert, Hugh Richmond et al, D. YOUNG & CO. 10 Staple Inn, London, WC1V 7RD (GB)**

ACTORUM AG

Seed Planting Device

This invention relates to seed planting devices of the type comprising an elongated strip of rigid or semi-rigid material, e.g. of wood, plastics or stiff cardboard, preferably pointed at one end for easy insertion into the ground, and carrying at or adjacent said end, one or more plant seeds adhering or otherwise secured to the strip, so that the seeds can be planted at precise locations and at precise depths simply by pressing the strip into the ground. If desired the strip can be marked with an indicating mark to indicate the precise planting depth, and may be impregnated with, or otherwise support, in a position adjacent the seeds, a nutrient or fertilizer to promote the germination and/or growth of the seed, and/or with a fungicide, presticide or other protective material to provide a protected environment for the seed growth. For convenience herein, such seed planting devices are referred to as 'seed sticks'.

Seed sticks of the foregoing type are known and are disclosed, for example, in US-A-3 098 320, US-A-3 098 321, US-A-3 846 954 and US-A-3 908 308.

The present invention provides an improved configuration for such seed devices which appears to enhance germination and accelerate emergence of the seed or seeds mounted thereon.

In accordance with the disclosures of US-A-3 846 954 and US-A-3 908 308, the seeds are first mixed with a molten wax-like material, e.g. polyethylene glycol, to form a uniform dispersion of the seeds in the wax carrier and then cast into apertures in the stick, and chilled so that the wax sets.

In US-A-3 098 320 the seed or seeds are adhesively secured to the face of the strip and optionally covered by a layer of porous paper, e.g. blotting paper, which protects the seeds and prevents them from being knocked off as the strip is inserted into the ground. The porous protecting layer is also said to provide a wicking function to draw moisture up to the seed. In US-A-3 098 321, a similar arrangement is disclosed but in this case an indentation is provided in the strip to accommodate the seed or seeds.

In accordance with the present invention we have found that the germination of seeds and/or their rate of emergence is enhanced if the seed or seeds, instead of being mounted in an aperture or indentation, or even on the face of the strip, are mounted on a side tab projecting from the plane of the strip to one side thereof. The reason for the improved germination and/or rate of emergence, which has been noted in a number of different species, is not at all clear. Improved contact with the soil does not seem to be the reason since planting devices configurations specifically designed to enhance contact with the soil, for example, by mounting the seed at the very tip of a pointed seed strip, do not provide any significant improvement in germination or rate of emergence.

Five different seed stick configurations, two in accordance with the present invention, which have been tested in plant growth trials are illustrated in the accompanying drawings. In each case the stick itself comprises a strip of stiff cardboard 1, pointed at one end and marked with a line 2 indicating the desired planting depth. In each case a single plant seed 3 is mounted on the stick using gum arabic (50% aqueous solution) as the adhesive. Other adhesives may be used such as polyvinyl acetate and gum guar, provided that they are non-toxic to the plant seed, but gum arabic is preferred. Complete encapsulation of the seed by the adhesive is best avoided, although improved germination and accelerated emergence are obtained even where the seeds are completely encapsulated, e.g. by immersion in the adhesive solution prior to mounting on the seed stick.

Figs. 1, 2 and 5 show seed planting devices which do not form part of the invention but were used for comparative tests.

In Fig. 1, the planting device is formed from two layers of cardboard separated at the tip (see the enlargement of Fig. 1a) to form a recess of which receives the seed.

In Fig. 2, the seed 3 is received in a hole 5 in the cardboard strip 1. On the reverse side, a strip 6 of brown paper coated with gum arabic solution is stuck across the strip so that an area of the adhesive is exposed through the hole 5 to hold the seed therein.

In Fig. 3, which is a first configuration in accordance with the present invention, a tongue or tab 7 is pressed out of the plane of the strip 1 at the pointed end, with the seed 3 being adhesively mounted on the underside of the tab.

Fig. 4, also in accordance with the invention, shows an alternative but similar arrangement in which the tongue or tab 7 is pressed out of the plane of the strip 1 at a location spaced from the pointed end of the strip.

In Fig. 5, the seed is located in a notch 8 formed in the pointed end of the strip.

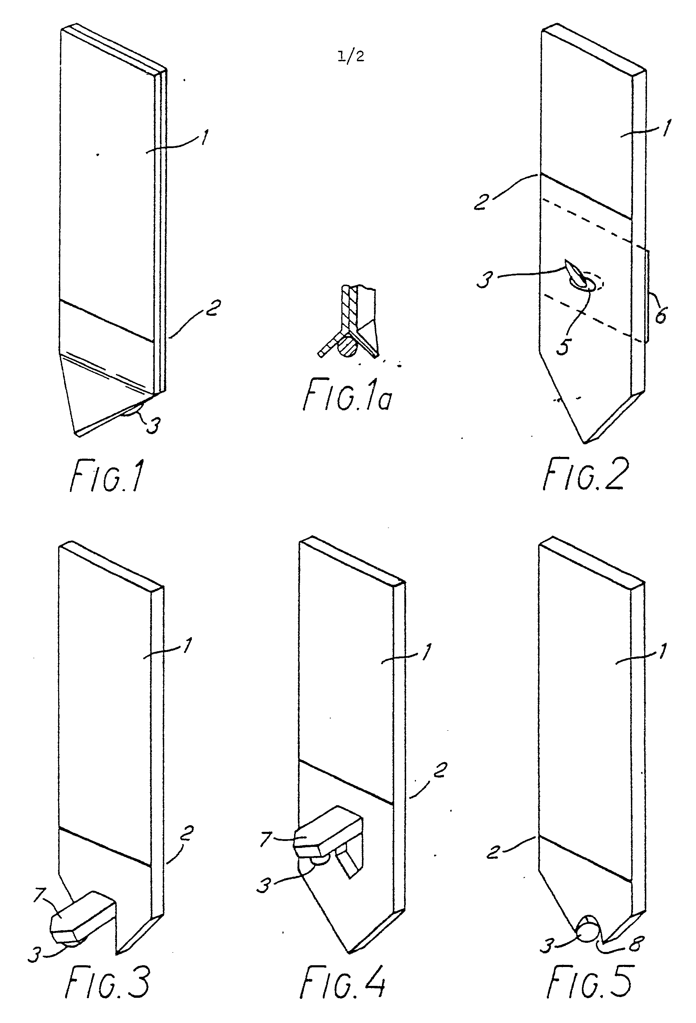

Using planting device configurations shown in Figures 1, 2, 3 and 5 growth trials have been carried out using lettuce and onion seeds. In these trials the seed strips were planted to a uniform depth (seed depth 9 mm) in seed trays filled to a depth of 5 cms, with white sand which is known to be a poor nutrient, the strips being planted at a uniform distance one from the other in a regular grid pattern, 50 strips to a tray. The trays were maintained at a constant temperature (20 °C) in a room of controlled relative humidity (50%) and under constant fluorescent light. The moisture content of the sand was maintained at a constant 10% by volume.

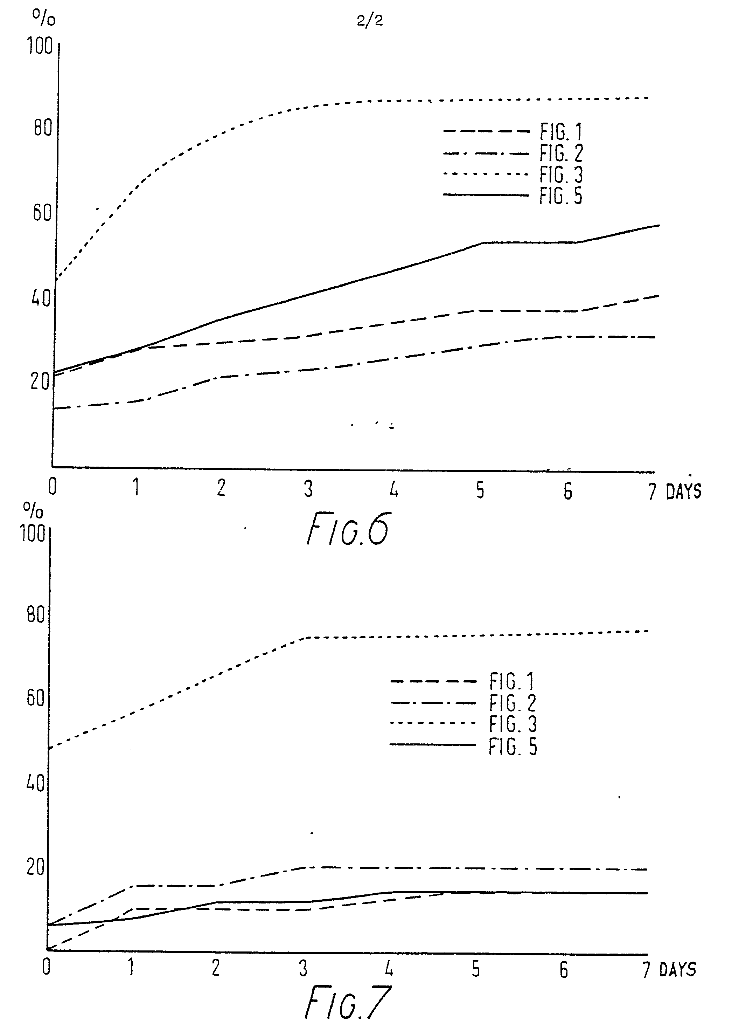

The trays were inspected at noon each day and the number of seedlings showing counted and expressed as a percentage of the total. The results are illustrated graphically in Figs. 6 and 7 of the accompanying drawings and clearly demonstrate the substantial increase in rate of emergence of seeds mounted on seed sticks having the configuration of Fig. 3, i.e. according to the invention, as compared with seed strips of the other three configurations, i.e. Figs. 1, 2 and 5, and also a substantial increase in the total number of seeds germinated at the end of seven days. Similar results are obtainable using seed strips of the configuration shown in Fig. 4. Fig. 6 shows the results obtained using lettuce seed and Fig. 7 those obtained using onion seed. In both graphs day O represents the first day upon which emergence was noted.

To reduce moisture loss by evaporation from the upper, exposed end of the strip, is preferably coated or impregnated with a water impermeable material, e.g. paraffin wax.

In a further series of trials seed strips according to the present invention (Figs. 3 and 4) were compared with seed strip configurations according to the prior art as follows:

Type A (prior art, U.S.P. 3 098 320): seed adhering to face of the seed strip below the soil line;

Type B (US-A-3 098 320): similar to Type A, but having the seed covered by a layer of porous blotting paper;

Type C (US-A-3 098 321): similar to Type B, but with the seed located in the upper end of a longitudinal slot formed in the seed strip and running from just below the soil level to the point and covered by a layer of porous blotting paper;

Type D (US-A-3 098 321): similar to Type C, but with the seed located in a hole in the seed strip below the soil level and covered by a layer of porous blotting paper;

Type E (US-A-3 846 954): seed located in a hole in the seed strip below soil level and held therein in a matrix of polyethylene glycol wax.

In each case identical materials were used, i.e. the same card and the same adhesive (50% aqueous gum arabic) and germination trials were performed under controlled environmental conditions for each species a four seed species with a total of 500 seeds of each species or each seed strip configuration. The percentages of seeds germinated 19 days after planting were as follows:

Table 1

| Seed species | Strip Type | | | | | | |
|---|---|---|---|---|---|---|---|
| | Fig. 3 | Fig. 4 | A | B | C | D | E |
| Sweet William | 72.4 | 89 | 51.2 | 55.8 | 54.2 | 39.6 | 10.5 |
| Brussels Sprouts | 79.8 | 79.4 | 78.4 | 65.6 | 68.2 | 76 | 10.8 |
| Carrots | 66.6 | 63.2 | 53.6 | 60.2 | 5.8 | 22.6 | 5.3 |

These figures show a substantial improvement in germination rate using seed strips in accordance with this invention as compared with the prior art types.

The percentage emergence after 24 days (final emergence) was as follows:

Table 2

| Seed Species | Strip Type | | | | | | |
|---|---|---|---|---|---|---|---|
| | Fig. 3 | Fig. 4 | A | B | C | D | E |
| Sweet William | 88 | 94 | 79.6 | 63.6 | 64.4 | 56.2 | 19 |
| Brussels Sprouts | 92.4 | 92 | 91 | 91.4 | 74.6 | 78.6 | 12.2 |
| Carrots | 76 | 74.8 | 68.4 | 73.8 | 28 | 55.6 | 18.6 |

These figures demonstrate a general improvement in overall emergence of seeds mounted on seed strips in accordance with this invention, although some variation is noted between various species.

## Claims

1. A seed planting device of the type comprising a flat strip (1) insertable into the ground and carrying adhesively secured thereon one or more seeds (3), characterised in that the seed(s) is/are adhesively secured on the underside of a tongue projecting from one face of the strip (1) and lying at an angle to the plane thereof.

2. A device according to claim 1, characterised in that said tongue (7) is integral with the strip.

3. A device according to claim 1 or 2, characterised in that the adhesive is gum arabic or gum guar.

4. A device according to any one of the preceding claims, characterised in that the strip is pointed at one end for ease of insertion into the ground and said tongue (7) is located immediately adjacent the point.

5. A device according to any one of claims 1–3, characterised in that the strip (1) is pointed at one end for ease of insertion into the ground and said tongue (7) is located intermediate the ends of the strip and spaced from the pointed end.

6. A device according to claim 4 or 5, characterised in that the upper end of the strip remote from the point is impregnated or coated with a layer of water-impermeable material.

7. A device according to claim 6, characterised in that said water-impermeable material is wax.

## Patentansprüche

1. Samen-Pflanzvorrichtung vom Typ eines flachen Streifens (1), der in den Boden einführbar ist und haftend daran befestigt einen oder mehrere Samen (3) trägt, dadurch gekennzeichnet, dass der (die) Samen an der Unterseite einer Zunge haftend befestigt ist (sind), welche von einer Fläche des Streifens (1) vorspringt und in einem Winkel zu deren Ebene liegt.

2. Vorrichtung nach Anspruch 1, dadurch gekennzeichnet, dass die Zunge (7) aus einem Stück mit dem Streifen besteht.

3. Vorrichtung nach Anspruch 1 oder 2, dadurch gekennzeichnet, dass der Klebstoff Gummi Arabicum oder Guar-Gummi ist.

4. Vorrichtung nach einem der vorausgehenden Ansprüche, dadurch gekennzeichnet, dass der Streifen an einem Ende für die Erleichterung des Einfügens in den Boden zugespitzt ist und die Zunge (7) unmittelbar bei der Spitze liegt.

5. Vorrichtung nach einem der Ansprüche 1 bis 3, dadurch gekennzeichnet, dass der Streifen (1) am einen Ende zur Erleichterung des Einfügens in den Boden zugespitzt ist und die Zunge (7) zwischen den Enden des Streifens und von dem zugespitzten Ende entfernt angeordnet ist.

6. Vorrichtung nach Anspruch 4 oder 5, dadurch gekennzeichnet, dass das obere Ende des Streifens, das von der Spitze entfernt ist, mit einer Schicht eines wasserundurchlässigen Materials imprägniert oder beschichtet ist.

7. Vorrichtung nach Anspruch 6, dadurch gekennzeichnet, dass das wasserundurchlässige Material ein Wachs ist.

## Revendications

1. Dispositif de plantage de semence du type constitué par une bande plate (1) pouvant être insérée dans le sol et portant une ou plusieurs semences (3) fixées sur elle par adhésif, caractérisé en ce que la ou chaque semence est fixée par adhésif sur le dessous d'une languette saillant à partir d'une face de la bande (1) et inclinée sur le plan de celle-ci.

2. Dispositif selon la revendication 1, caractérisé en ce que ladite languette (7) fait corps avec la bande.

3. Dispositif selon la revendication 1 ou 2, caractérisé en ce que l'adhésif est de la gomme arabique ou de l'agar-agar.

4. Dispositif selon l'une quelconque des revendications précédentes, caractérisé en ce que la bande est pointue à une extrémité pour faciliter l'insertion dans le sol et ladite languette (7) est située au voisinage immédiat de la pointe.

5. Dispositif selon l'une quelconque des revendications 1 à 3, caractérisé en ce que ladite bande (1) est pointue à une extrémité pour faciliter l'insertion dans le sol et ladite languette (7) est située entre les extrémités de la bande et espacée de l'extrémité pointue.

6. Dispositif selon la revendication 4 ou 5, caractérisé en ce que l'extrémité supérieure de la bande distante de la pointe est imprégnée ou revêtue d'une couche de matière imperméable à l'eau.

7. Dispositif selon la revendication 6, caractérisé en ce que ladite matière imperméable à l'eau est de la cire.

FIG.1a

FIG.1

FIG.2

FIG.3

FIG.4

FIG.5

FIG.6

FIG.7

7